(19) Europäisches Patentamt
European Patent Office
Office européen des brevets

(11) **EP 4 572 051 A1**

(12) **EUROPEAN PATENT APPLICATION**

(43) Date of publication:
**18.06.2025 Bulletin 2025/25**

(21) Application number: **24216981.1**

(22) Date of filing: **03.12.2024**

(51) International Patent Classification (IPC):
**H02H 3/00** (2006.01)    **H02H 3/087** (2006.01)
**H02H 3/093** (2006.01)    **H02H 5/04** (2006.01)

(52) Cooperative Patent Classification (CPC):
**H02H 3/006; H02H 3/087; H02H 3/0935; H02H 5/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.12.2023 CN 202311717283**

(71) Applicant: **Nio Technology (Anhui) Co., Ltd Hefei City, Anhui 230611 (CN)**

(72) Inventors:
• **CHEN, Bo**
**Hefei City, Anhui (CN)**

• **KONG, Fanchen**
**Hefei City, Anhui (CN)**
• **DU, Weinan**
**Hefei City, Anhui (CN)**
• **XIE, Minghui**
**Hefei City, Anhui (CN)**
• **WANG, Zhuoshi**
**Hefei City, Anhui (CN)**
• **CHEN, Zongwei**
**Hefei City, Anhui (CN)**
• **SU, Yi**
**Hefei City, Anhui (CN)**

(74) Representative: **Vossius & Partner Patentanwälte Rechtsanwälte mbB Siebertstrasse 3 81675 München (DE)**

(54) **METHOD AND APPARATUS FOR PROTECTING CIRCUIT ELEMENT**

(57) The disclosure relates to electronics technologies, and in particular to a method and apparatus for protecting a circuit element, and a non-transitory computer-readable storage medium storing a computer program for implementing the method. According to an embodiment of the disclosure, a method for protecting a circuit element includes: A. performing an initialization operation on a counter (210); B. obtaining a current flowing through the circuit element (220); C. updating a count value of the counter based on the current and a reference value (230); and D. setting a state of an electronic fuse based on a result of comparison between an updated count value and a set threshold (240).

Fig. 2

FIG. 2

**Description**

Technical Field

The disclosure relates to electronics technologies, and in particular to a method and apparatus for protecting a circuit element, and a non-transitory computer-readable storage medium storing a computer program for implementing the method.

Background Art

At present, a protection mechanism provided for various circuit elements in new energy vehicles includes hardware-based and software-based methods. The former requires an additional hardware circuit, which is not conducive to cost reduction. The latter controls an on/off state of an electronic fuse (e-Fuse) by running a computer program. For example, when a current flowing through a circuit element exceeds a set threshold, the e-Fuse automatically triggers a protection mechanism to cut off a current path, thereby preventing the current from flowing through the circuit element. However, the software-based method has high requirements for reasonable parameter setting, and once parameters are set improperly, the protection mechanism may be prone to a failure or false triggering. Therefore, circuit elements with high specifications have to be selected, which in turn leads to an increase in costs.

Summary

An objective of the disclosure is to provide a method and apparatus for protecting a circuit element, which can reduce a failure probability and a false triggering probability of an e-Fuse-based protection mechanism in a low-cost manner.

According to one aspect of the disclosure, a method for protecting a circuit element is provided. The circuit element to be protected is connected to an electronic fuse. The method includes:

A. performing an initialization operation on a counter;
B. obtaining a current flowing through the circuit element;
C. updating a count value of the counter based on the current and a reference value; and
D. setting a state of the electronic fuse based on a result of comparison between an updated count value and a set threshold.

Optionally, in the method, in step A, the initialization operation includes setting an initial value of the counter, where the initial value is determined based on at least an ambient temperature.

Optionally, in the method, step C includes:

C1. determining an adjustment amount to the count value of the counter based on a degree of deviation of the current from the reference value; and
C2. updating the count value based on the determined adjustment amount.

Optionally, in the method, in step C1, the adjustment amount is determined as follows: if the current is greater than the reference value, the adjustment amount is a value greater than 0; otherwise, the adjustment amount is a value less than or equal to 0.

Optionally, in the method, a magnitude of the adjustment amount is one of a plurality of discrete values, and each of the discrete values corresponds to a corresponding interval of the current.

Optionally, in the method, the reference value and the threshold are determined based on a damage feature of the circuit element, where the damage feature describes a relationship between: i) the current flowing through the circuit element; and ii) a product of the current flowing through the circuit element and a corresponding damage time of the circuit element under the current.

Optionally, in the method, the reference value is determined as follows: a product of a squared value of the current flowing through the circuit element that is greater than the reference value and the corresponding damage time tends to a stable value.

Optionally, in the method, the threshold is determined based on the stable value.

Optionally, in the method, step D includes: setting the electronic fuse to be in an off state to prevent the current from flowing through the circuit element if the updated count value exceeds the set threshold, and setting the electronic fuse to be in an on state if the updated count value does not exceed the set threshold.

According to another aspect of the disclosure, an apparatus for protecting a circuit element is provided. The apparatus includes:

> at least one memory storing a computer program; and
> at least one processor,
> where the computer program is run on the at least one processor to perform the following operations:
>
> > A. performing an initialization operation on a counter;
> > B. obtaining a current flowing through the circuit element;
> > C. updating a count value of the counter based on the current and a reference value; and
> > D. setting a state of the electronic fuse based on a result of comparison between an updated count value and a set threshold.

Optionally, in the apparatus, in operation A, the initialization operation includes setting an initial value of the counter, where the initial value is determined based on at least an ambient temperature.

Optionally, in the apparatus, operation C includes:

> C1. determining an adjustment amount to the count value of the counter based on a degree of deviation of the current from the reference value; and
> C2. updating the count value based on the determined adjustment amount.

Optionally, in the apparatus, in operation C1, the adjustment amount is determined as follows: if the current is greater than the reference value, the adjustment amount is a value greater than 0; otherwise, the adjustment amount is a value less than or equal to 0.

Optionally, in the apparatus, a magnitude of the adjustment amount is one of a plurality of discrete values, and each of the discrete values corresponds to a corresponding interval of the current.

Optionally, in the apparatus, the reference value and the threshold are determined based on a damage feature of the circuit element, where the damage feature describes a relationship between: i) the current flowing through the circuit element; and ii) a product of the current flowing through the circuit element and a corresponding damage time of the circuit element under the current.

Optionally, in the apparatus, the reference value is determined as follows: a product of a squared value of the current flowing through the circuit element that is greater than the reference value and the corresponding damage time tends to a stable value.

Optionally, in the apparatus, the threshold is determined based on the stable value.

Optionally, in the apparatus, operation D includes: setting the electronic fuse to be in an off state to prevent the current from flowing through the circuit element if the updated count value exceeds the set threshold, and setting the electronic fuse to be in an on state if the updated count value does not exceed the set threshold.

According to still another aspect of the disclosure, a non-transitory computer-readable storage medium storing a computer program is provided. The computer program, when executed by a processor, implements one or more steps of the method as described above.

In some embodiments of the disclosure, the reference value and the threshold are determined by using the damage feature of the circuit element. For example, the reference value is determined as such a critical value that if the current flowing through the circuit element exceeds the critical value, a product of a squared value of the current and a damage time tends to reach a stable value. In addition, the threshold is further determined based on the stable value. The introducing of the damage feature of the circuit element allows the reference value and the threshold to be set reasonably. In addition, since the damage feature has universality, the embodiments of the disclosure may be applied to various circuit elements. Furthermore, the setting of the reference value and the threshold mainly involves characteristics of the circuit element. Since the characteristics are often determined as design parameters in a vehicle function design and debugging stage, a calibration workload is significantly reduced, thereby shortening a development cycle.

Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:

> FIG. 1A is a schematic graph showing a product of a squared value of a current flowing through a circuit element A and a current duration for a damage feature to appear, with respect to the current;
> FIG. 1B is a schematic graph showing products of squared values of currents flowing through a plurality of circuit elements and current durations for a damage feature to appear, with respect to the currents;

FIG. 2 is a flowchart of a method for protecting a circuit element according to an embodiment of the disclosure;

FIG. 3 is a flowchart of a method for protecting a circuit element according to another embodiment of the disclosure; and

FIG. 4 is a schematic block diagram of an apparatus for protecting a circuit element.

Detailed Description of Embodiments

The disclosure is described below more comprehensively with reference to the accompanying drawings in which schematic embodiments of the disclosure are shown. However, the disclosure may be implemented in different forms, and should not be construed as being limited to the embodiments provided herein. The embodiments provided above are intended to make the disclosure of this specification comprehensive and complete, to more comprehensively convey the scope of protection of the disclosure to those skilled in the art.

In this specification, the terms such as "include" and "comprise" indicate that in addition to the units and steps that are directly and explicitly described in the specification and claims, other units and steps that are not directly or explicitly described are not excluded in the technical solutions of the disclosure.

In this specification, the term "connect" refers to an electrical connection for power transmission or a communication connection for signal transmission between two or more hardware entities, which includes a direct connection between two hardware entities, and a connection between two hardware entities via another hardware entity.

In this specification, the term "circuit element" refer to a variety of basic elements that constitute a circuit, which include, for example but are not limited to, a power transmission cable, a resistor, a capacitor, an inductor, a diode, a bipolar junction transistor, a field-effect transistor, and an integrated circuit chip, etc.

In this specification, the term "electronic fuse (e-Fuse)" refers to an execution element for circuit protection. An e-Fuse usually includes a switching element (for example, a metal-oxide-semiconductor field-effect transistor (MOSFET)) for current control, and controls a state of the switching element to implement on/off control of a current.

In this specification, the term "counter" refers to a module configured to implement a counting function, which may be implemented by hardware or software. The former usually uses a dedicated hardware circuit for implementation; and the latter is implemented by a written program, which is usually written based on a computer programming language. It should be noted that, in the following description, unless otherwise specified, the counter includes both forms described above.

In some embodiments of the disclosure, a cumulative change in a current flowing through a circuit element is recorded or tracked by a counter. The cumulative value reflects a possibility that the circuit element is damaged, and therefore may be used to determine whether to cut off the current flowing into the circuit element. It should be noted that characteristics due to the damage may vary from a circuit element to another. For example, smoking or burning of a power transmission cable, a resistor, a capacitor, and the like due to overcurrent may be used as a damage feature. For another example, an abnormality or a permanent failure of a function of a diode, a bipolar junction transistor, a field-effect transistor, an integrated circuit chip, and the like due to overcurrent may be used as a damage feature.

The appearance of the damage feature in the circuit element is correlated with a magnitude of a current flowing through the element and a duration of the current. The inventors of the disclosure have found through intensive research that the appearance of the damage feature has the following characteristics. As a current I flowing through a circuit element increases, a current duration Lt for a damage feature to appear continuously decreases, and a product S of a squared value $I^2$ of the current and the current duration Lt (i.e., $S = I^2 \times Lt$) decreases accordingly. When the current I flowing through the element increases to a certain extent, the product S tends to a constant value.

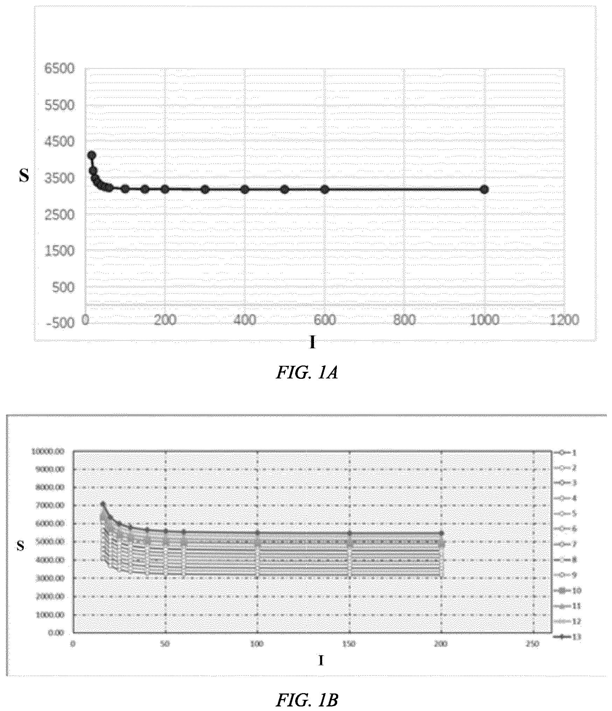

FIG. 1A is a graph showing a product of a squared value of a current flowing through a circuit element A and a current duration for a damage feature to appear, with respect to the current. A horizontal axis in the figure represents a current I flowing through the circuit element, and a vertical axis represents a product S of a squared value $I^2$ of the current and a current duration Lt. The above change characteristics may be clearly seen from FIG. 1A. Specifically, as shown in FIG. 1, when the current I flowing through a circuit element (for example, a power transmission cable) is small, the product S decreases with an increase in the current I; on the other hand, when the current I exceeds a reference value or critical value $I_{ref}$, the product S no longer decreases with the increase in the current I, and substantially tends to a constant $S_c$.

It should be noted that the change characteristics shown in FIG. 1A are universal characteristics. FIG. 1B is a schematic graph showing products of squared values of currents flowing through a plurality of circuit elements and current durations for a damage feature to appear, with respect to the currents. It may be learned from FIG. 1B that, the plurality of circuit elements have similarities in terms of the relationship between the squared value $I^2$ of each current and the product S, and merely differ in critical values, and stable values that the circuit elements tend to reach.

In some embodiments of the disclosure, for a circuit element, it may be determined based on a result of comparison between a count value of a counter and a set threshold whether to block a current flowing into the circuit element by setting an e-Fuse to be in an off state. For example, a count value $CNT(n)$ of the counter at an $n^{th}$ moment may be compared with the set threshold P. If the CNT(n) is greater than or equal to the threshold P, it is determined that the e-Fuse is set to enter an off state; otherwise, it is determined that the e-Fuse remains in an on state.

As described above, when the current flowing through the element increases to a certain extent, the product of the squared value of the current and the current duration required before a damage occurs in the element tends to reach a stable value. In some embodiments of the disclosure, the threshold may be set based on the stable value. The element A in FIG. 1A is used as an example. A value of the corresponding threshold P may be the stable value $S_c$. For another example, the threshold P may be set larger (when it is desired to raise a damage tolerance level) or smaller (when it is desired to lower the damage tolerance level) based on the stable value.

In some embodiments of the disclosure, for a circuit element, an adjustment amount $\delta(n)$ of the count value of the counter at the $n^{th}$ moment is determined based on a degree of deviation of a present current I(n) flowing through the circuit element at the $n^{th}$ moment from the above reference value or critical value $I_{ref}$. The term "moment" used herein may be, for example, a current sampling moment of a sensor, or a moment at which an apparatus for protecting a circuit receives a current sampling value from a sensor. For example, an increase and a decrease in the count value represent an increase and a decrease in a damage possibility, respectively. Therefore, when the current I(n) is greater than or equal to the reference value $I_{ref}$, the adjustment amount $\delta(n)$ of the count value is a positive value, or when the current I(n) is less than the reference value $I_{ref}$, the adjustment amount $\delta(n)$ of the count value is a negative value or zero.

In addition to a direction of adjustment (being the positive value or the negative value), the above adjustment amount further includes an adjustment amplitude or a magnitude of the adjustment amount. In some other embodiments of the disclosure, for a circuit element, an adjustment amplitude $|\delta(n)|$ of the circuit element may vary with a magnitude of the current I(n), or may remain constant. In some specific implementations, the current I(n) may be divided into m (m > 1) intervals, $E_1, ..., E_m$, where each interval range corresponds to one of a plurality of discrete values. These discrete values may be determined or calibrated by an actual test result or a simulation experiment result.

In the above case that the threshold is set based on the stable value, when the current is greater than or equal to the reference value, the adjustment amplitude may be determined according to

$$|\delta_+(n)| = \left\lceil \frac{I(n)^2 \times \tau}{P} \right\rceil \qquad (1)$$

where $|\delta_+(n)|$ is an upward adjustment amplitude of the count value at the $n^{th}$ moment, I(n) is the current flowing through the element at the $n^{th}$ moment, P is the set threshold, $\tau$ is a current sampling interval or a monitoring period, and [ ] represents a round up operation or a round down operation. It may be learned from formula (1) that, after the current I(n) exceeds the reference value $I_{ref}$, the adjustment amplitude continuously increases with an increase in the current.

When the current is less than the reference value, the adjustment amplitude may be determined according to the following formula (2):

$$|\delta_-(n)| = \left\lceil \frac{I(n)^2 \times \tau}{P'(I(n))} \right\rceil \qquad (2)$$

where $|\delta_-(n)|$ is a downward adjustment amplitude of the count value at the $n^{th}$ moment, I(n) is the current flowing through the element at the $n^{th}$ moment, P'(I(n)) is a value that varies with I(n), $\tau$ is a current sampling interval or a monitoring period, and [ ] represents a round up operation or a round down operation.

For example, P'(I(n)) in the above formula (2) may be determined by means of an experimental curve in the form of that in FIG. 1A. Specifically, an experimental curve similar to that in FIG. 1A provides a mapping relationship between the current I flowing through the circuit element and the product S (i.e., $I^2 \times Lt$), from which the product S corresponding to I(n) may be determined as P'(I(n)). Since when the current is below the reference value, the product S increases with a decrease in the current I, the adjustment amplitude $|\delta_-(n)|$ in formula (2) may continuously decrease with the decrease in the current I(n).

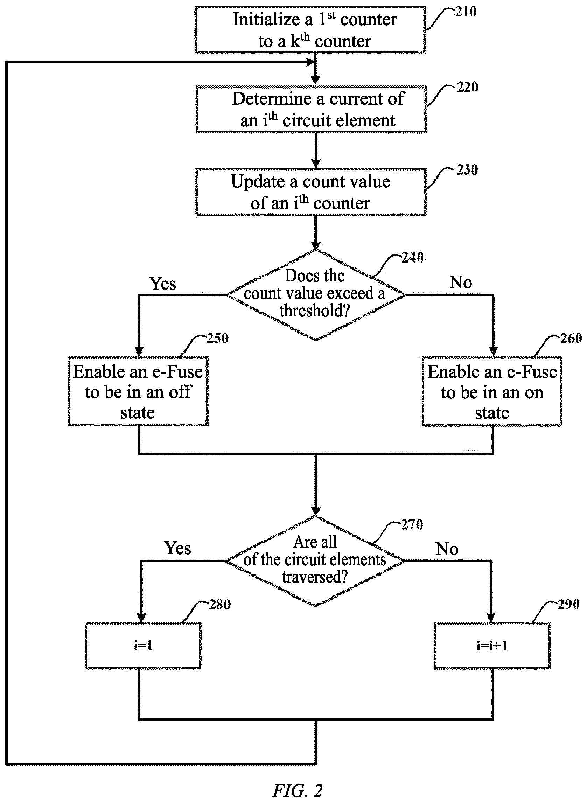

FIG. 2 is a flowchart of a method for protecting a circuit element according to an embodiment of the disclosure. The embodiment shown in FIG. 2 may be implemented by software and necessary general-purpose hardware (for example, a combination of a general-purpose computer system and a computer program), or may be implemented by dedicated hardware specifically configured to protect a circuit element, both of which are referred to as an apparatus for protecting a circuit element below.

The method shown in FIG. 2 starts at step 210. In this step, the apparatus for protecting a circuit element performs an initialization operation on a counter. The above initialized counter may be obtained by hardware or by software. For example, it is assumed herein that there are K circuit elements that need to be protected, and a corresponding counter is configured for each of the circuit elements.

The initialization operation includes, for example, determining initial values $CNT_1(0)$ to $CNT_K(0)$ of a 1st counter to a $K$th counter. In some specific implementations, for an $i$th circuit element or an $i$th counter ($i$ herein is a serial number of a circuit element, and is selected from 1, ..., K), an initial value $CNT_i(0)$ may be determined based on an ambient temperature $T_i$ of the circuit element. In addition to the ambient temperature, another factor may further be considered during setting of the initial value, for example, including, but not limited to, a thermal conductivity, a heat dissipation capability, etc. of the circuit element.

Then, the method proceeds to step 220 in which the apparatus for protecting a circuit element obtains a current $I_i(n)$ (when step 220 is first performed, i = 1) flowing through the $i$th circuit element at a current moment (for example, an $n$th moment). A method for obtaining the current includes, for example, sampling the current flowing through the circuit element by using a sensor included in the apparatus, or receiving a current sampling value from a sensor located outside the apparatus.

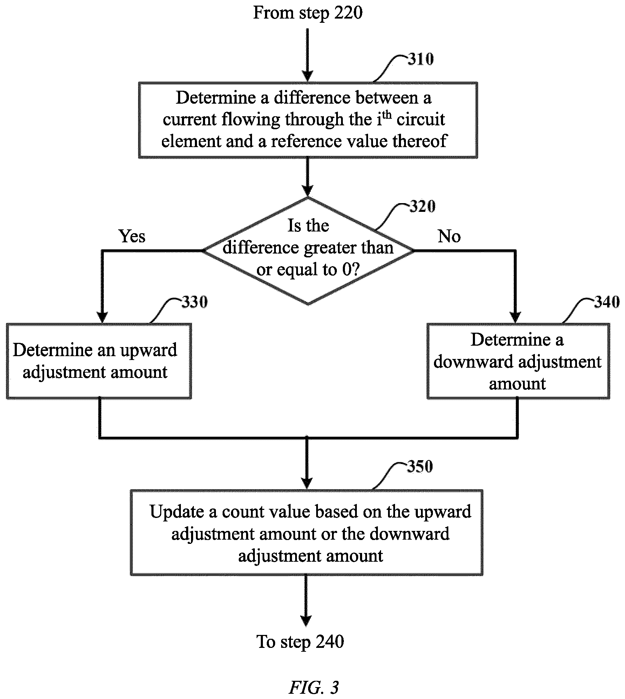

After step 220 is completed, the process shown in FIG. 2 proceeds to step 230. In step 230, the apparatus for protecting a circuit element updates a count value $CNTi(n-1)$ of the $i$th counter at a previous moment (for example, an $(n-1)$th moment) based on the current $I_i(n)$ obtained in step 220 and a preset reference value $I_{i\_ref}$ of the $i$th circuit element to obtain a count value $CNT_i(n)$ at the current moment. The meaning and the determination method of the reference value have been described above, and details are not described herein again. An update method of the count value will be described in detail below with reference to FIG. 3.

The method shown in FIG. 2 then proceeds to step 240. In this step, the apparatus for protecting a circuit element evaluates a state of the $i$th circuit element. Specifically, the apparatus for protecting a circuit element compares the updated count value $CNT_i(n)$ of the $i$th counter with a set threshold P. If the count value $CNT_i(n)$ is greater than or equal to the threshold P, it indicates that a damage possibility is high or even a damage event is occurring, and therefore, the method proceeds to step 250; otherwise, it indicates that the damage possibility is low, and therefore, the method proceeds to step 260. The meaning and the setting method of the threshold have been described above, and details are not described herein again.

In step 250, the apparatus for protecting a circuit element generates a command to set an e-Fuse to be in an off state, to prevent the current from flowing through the $i$th circuit element. On the other hand, in step 260, the apparatus for protecting a circuit element generates a command to set an e-Fuse to be in an on state.

After step 250 and step 260 are completed, the process shown in FIG. 2 moves to step 270. In step 270, the apparatus for protecting a circuit element determines whether states of all circuit elements to be protected at the current moment have been evaluated. If all of the circuit elements are traversed, the method proceeds to step 280; otherwise, the method proceeds to step 290.

In step 280, the apparatus for protecting a circuit element sets i to be 1, and then the method returns to step 220 to evaluate a state of the circuit element at a next moment (for example, an $(n+1)$th moment). In step 290, the apparatus for protecting a circuit element increments i (i = i + 1), and then the method returns to step 220 to evaluate a state of an $(i+1)$th circuit element at the current moment (for example, the $n$th moment).

FIG. 3 is a flowchart of a method for protecting a circuit element according to another embodiment of the disclosure. The embodiment shown in FIG. 3 may be used for implementing step 230 in FIG. 1.

After step 220 in FIG. 2 is performed, the method proceeds to step 310 in the process shown in FIG. 3. In step 310, the apparatus for protecting a circuit element determines a difference $\Delta_i(n)$ between the current $I_i(n)$ of the $i$th circuit element at the current moment (for example, the $n$th moment) and a reference value $I_{i\_ref}$ of the $i$th circuit element, i.e.,

$$\Delta_i(n) = I_i(n) - I_{i\_ref} \qquad (3)$$

Subsequently, the method proceeds to step 320 in which the apparatus for protecting a circuit element determines whether the difference $\Delta_i(n)$ is greater than or equal to 0. If the difference is greater than or equal to 0, the method proceeds to step 330 to determine an upward adjustment amount to a count value $CNTi(n-1)$; otherwise, the method proceeds to step 340 to determine a downward adjustment amount to a count value $CNT_i(n-1)$.

In step 330, the apparatus for protecting a circuit element determines an adjustment amplitude $|\delta+(n)|$ of the adjustment amount, for example, according to formula (1).

In step 340, the apparatus for protecting a circuit element determines an adjustment amplitude $|\delta_-(n)|$ of the adjustment amount, for example, according to formula (2).

After step 330 and step 340 are performed, the process shown in FIG. 3 proceeds to step 350. In step 350, the apparatus for protecting a circuit element updates the count value $CNT_i(n-1)$ based on the adjustment amplitude determined in step 330 or 340. For example, an updated count value $CNT_i(n)$ may be calculated according to the following formula:

$$CNT_i(n) = \begin{cases} CNT_i(n-1) + \delta_+(n) & if\ \Delta i(n) \geq 0, \\ CNT_i(n-1) - \delta_-(n) & if\ \Delta i(n) < 0 \end{cases} \quad (4)$$

After step 350 is performed, the process shown in FIG. 3 moves to step 240 in FIG. 1.

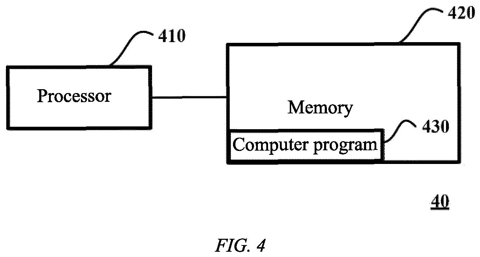

FIG. 4 is a schematic block diagram of an apparatus for protecting a circuit element.

The apparatus 40 for protecting a circuit element shown in FIG. 4 includes at least one memory 410 (for example, a non-volatile memory such as a flash memory, a ROM, a hard disk drive, a magnetic disk, or an optical disk), at least one processor 420, and a computer program 430.

The memory 410 stores the computer program 430 executable by the processor 420. The processor 420 is configured to run the computer program 430 stored in the memory 410. One or more steps included in the method described with reference to FIG. 2 and FIG. 3 above may be implemented by running, on the one or more processors, the computer program stored in the one or more memories (for example, in a manner of collaboratively running the computer program on a plurality of processors, or separately running the computer program on a single processor).

It should be noted that a sensor used to detect a current flowing through the circuit element, and an electronic fuse may be constituent units of the apparatus 40, or may be units external to the apparatus 40.

According to another aspect of the disclosure, a non-transitory computer-readable storage medium storing a computer program is further provided. The program, when executed by a processor, may implement one or more steps included in the method described with reference to FIG. 2 and FIG. 3 above.

The computer-readable storage medium in the disclosure includes various types of computer storage media, and may be any usable medium accessible to a general-purpose or special-purpose computer. For example, the computer-readable storage medium may include a RAM, a ROM, an EPROM, an E2PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. A combination thereof shall also fall within the scope of protection of the computer-readable storage medium. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

Those skilled in the art can understand that various illustrative logical blocks, modules, circuits, and algorithm steps described in this specification may be implemented as hardware, computer software, or a combination thereof.

To demonstrate interchangeability between the hardware and the software, various illustrative parts, blocks, modules, circuits, and steps above have been described comprehensively based on their functionalities. Whether to implement such functionalities in a form of hardware or software depends on specific application and design constrains imposed on an overall system. Those skilled in the art may implement the described functionalities for specific and particular application based on manners of change. However, determination of such an implementation should not be understood as a departure from the scope of the disclosure.

Although only some specific embodiments of the disclosure are described, those of ordinary skill in the art should understand that the disclosure may be implemented in many other forms without departing from the essence and scope of the disclosure. Therefore, the presented examples and implementations are deemed as illustrative rather than restrictive, and without departing from the spirit and scope of the disclosure defined by the appended claims, the disclosure may cover various modifications and substitutions.

The embodiments and examples proposed herein are provided to describe as adequately as possible embodiments according to the technology and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

**Claims**

1. A method for protecting a circuit element, wherein the circuit element to be protected is connected to an electronic fuse, the method comprising:

   A. performing an initialization operation on a counter;
   B. obtaining a current flowing through the circuit element;
   C. updating a count value of the counter based on the current and a reference value; and

D. setting a state of the electronic fuse based on a result of comparison between an updated count value and a set threshold.

2. The method of claim 1, wherein in step A, the initialization operation comprises setting an initial value of the counter, wherein the initial value is determined based on at least an ambient temperature.

3. The method of claim 1 or 2, wherein step C comprises:

   C1. determining an adjustment amount to the count value of the counter based on a degree of deviation of the current from the reference value; and
   C2. updating the count value based on the determined adjustment amount.

4. The method of claim 3, wherein in step C1, the adjustment amount is determined as follows: if the current is greater than the reference value, the adjustment amount is a value greater than 0; otherwise, the adjustment amount is a value less than or equal to 0.

5. The method of claim 3 or 4, wherein a magnitude of the adjustment amount is one of a plurality of discrete values, and each of the discrete values corresponds to a corresponding interval of the current.

6. The method of any one of claims 3 to 5, wherein the reference value and the threshold are determined based on a damage feature of the circuit element, wherein the damage feature describes a relationship between i) the current flowing through the circuit element and ii) a product of the current flowing through the circuit element and a corresponding damage time of the circuit element under the current.

7. The method of any one of claims 3 to 6, wherein the reference value is determined as follows: a product of a squared value of the current flowing through the circuit element that is greater than the reference value and the corresponding damage time tends to a stable value.

8. The method of claim 7, wherein the threshold is determined based on the stable value.

9. An apparatus for protecting a circuit element, comprising:

   at least one memory storing a computer program; and
   at least one processor,
   wherein the computer program is run on the at least one processor to perform the following operations; and/or preferably the operations of the method of any one of the preceding claims,:

   A. performing an initialization operation on a counter;
   B. obtaining a current flowing through the circuit element;
   C. updating a count value of the counter based on the current and a reference value; and
   D. setting a state of the electronic fuse based on a result of comparison between an updated count value and a set threshold.

10. A non-transitory computer-readable storage medium storing a computer program, wherein the computer program, when executed by a processor, implements one or more steps of the method according to any one of claims 1 to 8.

FIG. 1A

FIG. 1B

```
            ┌─────────────────────┐ ⌐210
            │ Initialize a 1ˢᵗ counter │
            │   to a kᵗʰ counter  │
            └─────────────────────┘
                      │
                      ▼
            ┌─────────────────────┐ ⌐220
            │ Determine a current of │
            │  an iᵗʰ circuit element │
            └─────────────────────┘
                      │
                      ▼
            ┌─────────────────────┐ ⌐230
            │  Update a count value  │
            │   of an iᵗʰ counter   │
            └─────────────────────┘
                      │
                      ▼
                  ◇ 240
          Yes    Does the    No
         ◄───  count value exceed a  ───►
                  threshold?
```

Initialize a 1st counter to a kth counter — 210

Determine a current of an ith circuit element — 220

Update a count value of an ith counter — 230

Does the count value exceed a threshold? — 240

Yes — Enable an e-Fuse to be in an off state — 250

No — Enable an e-Fuse to be in an on state — 260

Are all of the circuit elements traversed? — 270

Yes — i=1 — 280

No — i=i+1 — 290

*FIG. 2*

From step 220

310

Determine a difference between a current flowing through the i$^{th}$ circuit element and a reference value thereof

320

Is the difference greater than or equal to 0?

Yes

No

330

Determine an upward adjustment amount

340

Determine a downward adjustment amount

350

Update a count value based on the upward adjustment amount or the downward adjustment amount

To step 240

FIG. 3

*FIG. 4*

Europäisches
Patentamt

European
Patent Office

Office européen
des brevets

# EUROPEAN SEARCH REPORT

**Application Number**

EP 24 21 6981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/187922 A1 (RANDAZZO VINCENZO [IT] ET AL) 15 June 2023 (2023-06-15) | 1,3-5,9, 10 | INV.<br>H02H3/00 |
| A | * paragraphs [0010], [0085] - [0141], [0309]; claims 2,4,10,24; figures 4, 5 * | 2,6-8 | H02H3/087<br>H02H3/093 |
| | ----- | | |
| X | US 5 994 790 A (NAGASHIMA YOSHIKAZU [JP] ET AL) 30 November 1999 (1999-11-30)<br>* columns 11-19; figures 2,7 * | 1,9,10 | ADD.<br>H02H5/04 |
| | ----- | | |
| X | US 2014/347774 A1 (UEHARA MANABU [JP]) 27 November 2014 (2014-11-27) | 1-3,9,10 | |
| A | * paragraphs [0030] - [0048]; figures 3A, 4, 5 * | 4,5 | |
| | ----- | | |
| A | BONEKAMP H: "GENERAL-PURPOSE ELECTRONIC FUSE FOR DIRECT AND ALTERNATING CURRENT", ELEKTOR ELECTRONICS, ELEKTOR ELECTRONICS, GB,<br>vol. 23, no. 253,<br>1 March 1997 (1997-03-01), pages 56-61,<br>XP000721730,<br>ISSN: 0268-4519<br>* the whole document * | 6-8 | |

**TECHNICAL FIELDS SEARCHED (IPC)**

H02H

The present search report has been drawn up for all claims

| Place of search | Date of completion of the search | Examiner |
|---|---|---|
| Munich | 18 March 2025 | Gomes Guerreiro, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................................
& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                      EP 24 21 6981

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2025

| Patent document cited in search report | Publication date | Patent family member(s) | | Publication date |
|---|---|---|---|---|
| US 2023187922 A1 | 15-06-2023 | NONE | | |
| US 5994790 A | 30-11-1999 | JP | 3374361 B2 | 04-02-2003 |
| | | JP | H10282159 A | 23-10-1998 |
| | | US | 5994790 A | 30-11-1999 |
| US 2014347774 A1 | 27-11-2014 | JP | 2014230396 A | 08-12-2014 |
| | | US | 2014347774 A1 | 27-11-2014 |

EPO FORM P0459

For more details about this annex : see Official Journal of the European Patent Office, No. 12/82